# EUROPÄISCHE PATENTANMELDUNG

(11) **EP 4 487 996 A1**
(43) Veröffentlichungstag der Anmeldung: **08.01.2025**
(21) Anmeldenummer: 23183009.2
(22) Anmeldetag: 03.07.2023
(51) Int. Cl.: B24B 21/18, B24B 19/26, B24B 21/00, B24B 21/16, B24B 41/06, B24B 55/02, B23Q 1/52, B23Q 11/12, B23Q 11/14

(54) **PROBENSCHLEIFMASCHINENAUFSATZ UND PROBENSCHLEIFMASCHINE**

(71) Anmelder: Schütz, Wolfram, 42697 Solingen (DE)
(72) Erfinder: Middeldorf, Stefan, 42699 Solingen (DE)
(74) Vertreter: Lippert Stachow Patentanwälte Rechtsanwälte

(57) **Zusammenfassung**

Die Erfindung betrifft einen Probenschleifmaschinenaufsatz mit einem Probenhalter zur lösbaren Festlegung mindestens eines zu schleifenden Probenstückes, wobei der Aufsatz an einer Probenschleifmaschine anordenbar und/oder angeordnet ist, sodass das von dem Probenhalter festgelegte Probenstück von der Schleifmaschine schleifend bearbeitet werden kann. Erfindungsgemäß weist der Probenhalter eine Kühleinrichtung zur Kühlung des während der schleifenden Bearbeitung an dem Probenhalter festgelegten Probenstückes auf. Alternativ oder zusätzlich weist der Probenschleifmaschinenaufsatz einen Wendemechanismus für den Probenhalter auf, mittels welchem der Probenhalter unter permanenter Festlegung des Probenstückes an dem Probenhalter in eine erste und eine zweite Arbeitsposition zur Bearbeitung des Probenstückes an der Schleifmaschine und eine zwischen diesen angeordnete Wendeposition überführbar ist. Ferner betrifft die Erfindung eine Probenschleifmaschine mit Probenschleifmaschinenaufsatz.

## Beschreibung

Die Erfindung betrifft einen Probenschleifmaschinenaufsatz und eine Probenschleifmaschine mit einem solchen sowie ein Schleifverfahren unter Verwendung einer derartigen Probenschleifmaschine.

Eine gattungsgemäße Probenschleifmaschine ist beispielsweise aus der DE 3607818 C1 bekannt. Die Schleifmaschine stellt eine Bandschleifmaschine zum paketweisen Schleifen von Zugproben aus Blechen dar, wobei die in dem Probenhalter festgelegten Probenstücke im mittleren Bereich derselben auf Maß geschliffen werden, so dass diese dann in einem Materialprüfungsverfahren wie beispielsweise einem Zugversuch gemäß einschlägigen Prüfnormen verwendbar sind. Nachdem die Spannvorrichtung mit den Zugprobenstücken in den beiden Aufnahmen des Schlittens angeordnet ist, wird der Schlitten mehrmals von Hand über das Schleifband hin und her bewegt, wobei die einen Schmalseiten der Zugproben geschliffen werden. Hiernach wird die Spannvorrichtung aus den Aufnahmen des Schlittens manuell herausgenommen, um 180° gedreht und wieder manuell in die Aufnahmen eingesetzt, wonach die anderen Schmalseiten der Zugproben geschliffen werden. Auf diese Weise wird sichergestellt, dass die zu bearbeitenden Schmalseiten der Zugproben parallel und gegenseitig gleich geschliffen werden.

Es besteht das Bedürfnis, eine Probenschleifmaschine oder Aufsatz für diese dahingehend weiterzuentwickeln, dass die Probenstücke mit höherer Genauigkeit und Reproduzierbarkeit bearbeitet werden können, um die Reproduzierbarkeit von Materialprüfungsuntersuchungen wie beispielsweise bei einem Zugversuch weiter zu verbessern. Dies beinhaltet beispielsweise, dass die Messwerte von Zugversuchen an mehreren Proben eine geringere Streuung um den Mittelwert aufweisen und damit auch gegebenenfalls der Mittelwert mit höherer Zuverlässigkeit bestimmt werden kann. Weiterhin ist es ein Problem, dass bei dem Umspannen der Probenstücke an der Schleifmaschine zur Bearbeitung der anderen Schmalseite des Probenstückes Einspannfehler oder Ungenauigkeiten bei der Positionierung des Probenhalters am Schlitten erfolgen können. So können beispielsweise geringfügige Verkantungen oder Fehlorientierungen der Probenstücke zu dem Probenhalter und damit auch zu der Bearbeitungsfläche der Schleifmaschine wie beispielsweise dem Schleifband erfolgen, welche unter Umständen dazu führen können, dass ein Probenstück nicht mehr den Erfordernissen der Formhaltigkeit der jeweiligen Prüfnorm für die Werkstoffprüfung entspricht und damit zu verwerfen ist.

Zwar wird in einschlägigen Prüfnormen zur Durchführung von Materialprüfungen beispielsweise DIN/ISO oder ASTM-Normen, die Dimension der zu verwendenden Probenstücke mit bestimmten Toleranzen durch die Nennung der Formhaltigkeit festgelegt, beispielsweise bei der Untersuchung von Zugproben zur Bestimmung von Zugfestigkeiten bestimmter Materialien. Obwohl hier in der Regel bestimmte Toleranzen für die vordefinierten Maße der Probenstücke in diesen Normen gegeben sind, versteht es sich, dass die Genauigkeit der Prüfergebnisse weiter verbessert werden kann, beispielsweise eine Streuung der Messergebnisse um einen Mittelwert verringert werden kann, beispielsweise unter Verringerung der Standardabweichung der Messergebnisse, um noch genauere und zuverlässigere Prüfergebnisse zu erhalten.

Insbesondere in der Industrie für Tiefziehvorgänge an Blechen und deren Prüfung werden für die Bestimmung von R+N-Werten, im Speziellen gemäß ISO 10275 zur Ermittlung des Verfestigungsexponenten (N-Wert) und im Speziellen gemäß ISO 10113 zur Ermittlung der senkrechten Anisotropie (r-Wert) deutlich erhöhte Anforderungen an die Formhaltigkeit bzw. die Parallelität in der Messlänge gefordert, da bei diesen Prüfungen die Breitenänderung bzw. Breitenreduzierung im Zugversuch der beschriebenen Zugproben aus Blechen während dem Zugversuch taktil oder optisch gemessen werden. Die IDDRG International Deep Drawing Research Group empfiehlt für Versuche zur Bestimmung der R+N-Werte eine Formhaltigkeit bzw. Parallelität von gleich oder kleiner als 0,02 mm. Derart hohe Anforderungen sind mit einer Schleifmaschine nach der DE 3607818 C1 nicht oder nur äußerst schwer zu erzielen.

Ferner sollen andere Einflussgrößen des Schleifvorganges auf das Probenstück, welche zu einer stärkeren Streuung der Messergebnisse der Materialprüfung oder zu einer gewissen Änderung der Messergebnisse, z.B. in Bezug auf den Mittelwert der Messergebnisse, führen können, vermindert oder vermieden werden, so dass die Probenstücke mit höherer Reproduzierbarkeit hergestellt werden und damit auch die Reproduzierbarkeit der Messergebnisse in dem Prüfverfahren verbessert werden können.

Die Schleifbearbeitung des Probenstückes soll hierbei zudem möglichst zeit- und kosteneffektiv, reproduzierbar und auch durch ungelernte Bediener durchführbar sein. Ein Ausschuss an bearbeiteten Probenstücken durch unsachgemäße Bearbeitung während des Schleifvorganges soll minimiert werden bzw. falsche Rückschlüsse auf die Materialcharakteristik durch verfälschte Ergebnisse eines Zugversuchs z.B. gemäß ISO 6892 müssen sicher ausgeschlossen werden können.

Es besteht somit die Aufgabe, eine Probenschleifmaschine oder einen Probenschleifmaschinenaufsatz für eine solche bereitzustellen, mit welcher/m die obigen Nachteile teilweise oder vollständig behoben werden können und die Probenstücke besonders reproduzierbar und wirtschaftlich bearbeitbar sind. Die gilt insbesondere für Probenstücke für die Materialprüfung.

Diese Aufgabe wird durch einen erfindungsgemäßen Probenschleifmaschinenaufsatz nach Anspruch 1 und eine Probenschleifmaschine mit einem solchen erfindungsgemäßem Probenschleifmaschinenaufsatz gelöst, sowie durch ein erfindungsgemäßes Verfahren zur Bearbeitung bzw. zum Schleifen von Probenstücken unter Einsatz einer erfindungsgemäßen Probenschleifmaschine.

Allgemein im Sinne der Erfindung weist hierbei die Probenschleifmaschine das Schleifmittel zur schleifenden Bearbeitung des zumindest einen Probenstückes auf, beispielsweise ein Schleifband, welches umlaufend mittels eines Antriebes bewegt wird. Der Probenschleifmaschinenaufsatz umfasst hierbei den Probenhalter und weitere Einrichtungen zur Bedienung und/oder Konfiguration des Probenhalters.

Nach einer ersten Alternative wird die Aufgabe dadurch erfindungsgemäß gelöst, dass der Probenhalter eine Kühleinrichtung zur Kühlung des an dem Probenhalter festgelegten Probenstückes aufweist, wobei die Kühleinrichtung insbesondere ausgebildet ist, um den Probenhalter bzw. das an dem Probenhalter festgelegte Probenstück während der schleifenden Bearbeitung desselben mittels der Schleifmaschine zu kühlen. Hierzu können in oder an dem Probenhalter angeordnete Kühlmittelkanäle vorgesehen sein, welche von einem Kühlmittel durchströmbar sind oder durchströmt werden. Es versteht sich, dass allgemein ein Kühlmittelaggregat zur Kühlung des Kühlmittels und vorzugsweise eine Pumpe zur Förderung des Kühlmittels durch den Probenhalter vorgesehen sind.

Mittels des erfindungsgemäßen Probenhalters mit Kühleinrichtung kann eine Temperaturerhöhung des Probenstückes während des Schleifvorganges durch die aufgrund des Schleifvorganges in das Probenstück eingebrachte Energie bzw. Wärme (Reibungswärme) verringert oder vermieden werden oder das Probenstück bei den vordefinierten Bedingungen des Schleifvorganges unterhalb einer vorgegebenen Maximaltemperatur gehalten werden, beispielsweise durch geeignete Anpassung der Kühlmitteltemperatur Die Temperatur des Probenstückes kann durch die erfindungsgemäße Kühlung beispielsweise auf ≤ 65°C oder ≤ 50°C, beispielsweise auch ≤ 45°C oder ≤ 40°C oder ≤ 35°C gehalten werden. Die Umgebungstemperatur beim Schleifvorgang und/oder Temperatur der Zugprobe unmittelbar vor dem Schleifvorgang kann beispielsweise 20°C betragen. Die Temperaturerhöhung des Probenstückes durch das Schleifen kann somit aufgrund der erfindungsgemäßen Kühlung beispielsweise auf ≤ 45°C oder ≤ 30°C, beispielsweise auch ≤ 25°C oder ≤ 20°C oder ≤ 15°C gehalten werden. Die Temperaturmessung kann beispielsweise während des Schleifvorganges erfolgen, indem beispielsweise in eine oder mehrere Zugproben, welche dann als Referenzproben dienen, Kanäle eingebracht werden, in welchen Thermoelemente angeordnet werden, wobei die Temperatur von diesen während des Schleifvorganges ausgelesen wird, und diese Referenzproben zusammen mit anderen Proben in einem Schleifvorgang bearbeitet werden. Alternativ kann bspw. ein Thermoelement in den Probenhalter nahe den zu bearbeitenden Proben eingebracht werden. Eine Verkürzung der Schleifintervalle, bei welchen das Probenstück schleifend bearbeitet wird, oder Verlängerung der Zeiträume bzw. Schleif-Pause zwischen den Schleifintervallen, ist hierdurch entbehrlich, was die Wirtschaftlichkeit der Probenbearbeitung wesentlich verbessert. Der Schleifvorgang kann erfindungsgemäß bevorzugt kontinuierlich ohne Unterbrechung bis zum Erreichen der Sollmaße des Probenstückes und ohne kritische Temperaturüberschreitung durchgeführt werden.

Es hat sich im Zuge der Erfindung herausgestellt, dass durch die erfindungsgemäße Maßnahmen Temperatureinwirkungen auf das Probenstück während des Schleifvorganges, welche zu Materialänderungen führen und das Ergebnis der Materialprüfung wie beispielsweise in einem Zugversuch ändern könnten, vermieden werden können. Diese Materialänderungen des Probenstückes können ansonsten beispielsweise oberflächlich oder auch innerhalb des Korpus des Probenstückes in Form von Gefügeänderungen erfolgen. Derartige Veränderungen der Materialeigenschaften sind beispielsweise für die Gruppe der "bake hardening" Stähle bei temperaturkritischen Stählen bekannt, bei welchen sich durch das Backen eine Härtung des Materials ergeben kann, aber auch bei anderen temperaturempfindlichen Metallen oder Legierungen. In der Automotive-Industrie werden für den Bau der Fahrzeugkarosserie vermehrt so genannte "bake hardening (BH)" Stähle eingesetzt. Diese Stähle werden im Karosseriebau im weichen Lieferzustand der Bleche für Tiefziehvorgänge an 3D-Bauteilen wie zum Beispiel Kotflügel oder Kofferraumdeckel verwendet. Nach der erfolgreichen Tiefziehumformung werden diese zur Fahrzeugkarosserie verschweißt und anschließend z. B. mittels kathodischer Tauchlackierung lackiert. In der Regel erfolgt die Trocknung der Lacke thermisch bei ca. 170 - 200 Grad. Dieser Wärmeeintrag dient neben der Trocknung der Lacke ebenfalls der erwünschten Härtung der bake hardening-Stähle da durch diesen Temperatureintrag eine Änderung der kristallinen Struktur bewirkt wird was zur Festigkeitserhöhung der Blechteile und damit zur Erhöhung der Steifigkeit der Karosserie führt.

Im Zuge der Erfindung hat es sich herausgestellt, dass die Erfindung auch bei bake hardening (BH)-Stählen besonders vorteilhaft anwendbar ist und die Prozesswärme bei beim Schleifen der Zugproben effektiv und reproduzierbar abgeleitet werden kann und zu besonders genauen und reproduzierbaren Zugprüfungsergebnissen führt. So beginnen die Bake Hardening-Stähle oftmals bei einer Temperatur von ca. 60 - 80 Grad Celsius sich im Gefüge zu verändern, beispielsweise zu verfestigen, so dass es bei herkömmlichen Probenschleifverfahren leicht zu einer Verfälschung der Ergebnisse bei einem Zugversuch kommt. Der BH-Effekt wird meist durch den BH2-Wert beschrieben. Durch diese wird der Streckgrenzenanstieg nach dem *Backen* bei 170 °C nach 2 % Vorrecken und anschließender Wärmebehandlung angegeben.

Die Erfindung bezieht sich somit insbesondere auch auf das Schleifen von bake hardening-Stählen, insbesondere Stählen nach der Norm DIN EN 10268, DIN EN 10151, DIN EN 10346 und/ oder VDA 239-100, jeweils in der am Anmeldetag dieser Patentanmeldung gültigen Fassung, beispielsweise Stähle der Typen CR180BH, CR210BH, CR240BH und CR270BH, HC 300B, HC180B / HX180BD, HC220B / HX220BD, HC260B / HX260BD, HC300B / HX300BD. Die Bestimmung der Streckgrenzenerhöhung der BH-Stähle kann beispielsweise nach der DIN EN 10325-2006-10 erfolgen.

Die konventionelle Probenfertigung von Flachzugproben, insbesondere von BH-Stählen per Fräsen, was überaus arbeitsaufwendig ist, erübrigt erfindungsgemäß. Die Probenstücke können erfindungsgemäß bspw. einfach durch Stanzen hergestellt werden und etwaige Materialverdichtung wie die Kaltverfestigung der Randzonen durch das Stanzen können durch die Schleifbearbeitung beseitigt werden. Dies gilt auch für andere empfindliche Metalle oder Legierungen, insbesondere Stähle, bspw. für temperaturkritische Materialien oder Metalle.

Weiterhin hat sich die Verwendung der erfindungsgemäßen Schleifmaschine bzw. Anwendung des Schleifverfahrens bei anderen temperaturempfindlichen Materialien als besonders vorteilhaft erwiesen, bei welchen ansonsten bspw. temperaturbedingt Oberflächenänderungen oder Gefügeänderungen des Probenstückes auftreten können, insbesondere auch bei Nichteisen-Metallen oder deren Legierungen, Leichtmetalllegierungen, insbesondere Aluminium- und/oder Magnesiumlegierungen.

Derartige Materialprüfungen können beispielsweise Zugversuche an Metallen gemäß der ISO-Norm 6892:2020-06 sein.

Nach einer zweiten Alternative wird die Aufgabe durch einen Probenschleifmaschinenaufsatzes oder eine Probenschleifmaschine mit einem solchen Aufsatz gelöst, bei welchem der Aufsatz einen Wendemechanismus für den Probenhalter aufweist mittels welchem der Probenhalter unter permanenter Festlegung des Probenstückes an dem Probenhalter in eine erste und eine zweite Arbeitsposition zur Bearbeitung des Probenstückes an der Schleifmaschine überführbar ist, wobei in beiden Arbeitsposition jeweils eine andere von zwei gegenüberliegenden Seiten des Probenhalters der Schleifmaschine zugewandt angeordnet und mit dem Schleifmittel der Schleifmaschine in Wirkkontakt bringbar ist. Durch den Wendemechanismus kann somit eine automatisierte Drehung des Probenhalters um 180° erfolgen, um die jeweils andere Seite des Probenstückes schleifen zu können. Eine manuelle Handhabung des Probenhalters bei dem Wendevorgang ist somit nicht erforderlich. Es hat sich herausgestellt, dass hierdurch die Probenstücke mit größerer Maßgenauigkeit hergestellt werden und Einspannfehler oder Ungenauigkeiten in Bezug auf die Einstellung des Probenhalters an dem Schleifmaschinenaufsatz vermieden werden können.

Im Zuge der Erfindung hat es sich herausgestellt, dass es bei dem Schleifprozess für die Wärmeableitung entscheidend ist, dass der gekühlte Probenhalter exakt in dessen Halterung positioniert bzw. eingelegt ist und während dem Schleifen ein reproduzierbarer und exakter Kontakt zu der Zugprobe bzw. den Zugproben gewährleistet ist. Dies wird durch die erfindungsgemäße Probenschleifmaschine in besonderer Weise gewährleistet, da ein manuelles Umspannen des Probenhalters mit seiner Fehleranfälligkeit wie bei der DE 3607818 C1 vermieden wird.

Ferner ist mittels der erfindungsgemäßen Probenschleifmaschine der Schleifvorgang insgesamt mit mehrmaligem Schleifen gegenüberliegender Seiten der Probenstücke auch schneller durchführbar als bei einem manuellen Umspannen des Probenhalters oder herkömmlichen Schleifmaschinen.

Ferner ist mittels der erfindungsgemäßen Probenschleifmaschine der Schleifvorgang auch mit größerer ZustellGeschwindigkeit durchführbar, als bei einem manuellen Umspannen des Probenhalters oder herkömmlichen Schleifmaschinen. Die Zustellgeschwindigkeit ist hierbei die Höhenzustellung des Schleifkopfes in Richtung auf das Schleifmittel wie z.B. Schleifband. Die Zustellung kann bspw. mit vorgegebenen Schritten bzw. Oszillationshüben wie bspw. Schritten von 0,05 mm bis zum gewünschten Zielmaß erfolgen, ggf. mit Schritten mit geringerem Hub zur Feinbearbeitung gegen Ende der Schleifbearbeitung.

Ein besonderer Vorteil ergibt sich durch eine Kombination der beiden Alternativen, also durch die erfindungsgemäße Kühleinrichtung des Probenhalters mit dem vorgesehenen Wendemechanismus, da dann das Wenden des Probenhalters von der ersten in die zweite Arbeitsposition automatisiert, also nicht mehr manuell, erfolgt. Hierdurch ist zum einen eine permanente Kühlung der Probenstücke während der gesamten Schleifbearbeitung ermöglicht. Die Kühlung während des Wendevorganges, also dem Zeitraum zwischen der Überführung des Probenstückes von der ersten in die zweite Arbeitsposition oder umgekehrt, bedingt, dass auch hier eine Abkühlung des Probenstückes erfolgt und damit die Prozessgeschwindigkeit der Probenherstellung unter Einhaltung der geforderten Maximaltemperatur des Probenstückes beschleunigt werden kann. Ferner wird durch die genannte Kombination der Merkmale die Gefahr einer Beeinträchtigung der Kühlmittelleitungen insbesondere während des Wendevorganges vermindert. So ist bei einem manuellen Wenden des Probenhalters stets darauf zu achten, dass die Kühlmittelleitungen nicht in eine unsachgemäße Lage kommen, beschädigt werden oder dergleichen, wobei diese Gefahr durch Verwendung eines Wendemechanismus, bei welchem bevorzugt der Wendevorgang mechanisiert bzw. automatisiert und auf vorbestimmte Art und Weise erfolgt, vermindert wird.

Es hat sich herausgestellt, dass durch den Einsatz des Wendemechanismus zudem Schleiffehler vermindert werden können, sodass die Probenstücke zuverlässiger in sehr engen Formhaltigkeits-Toleranzen im Schleifvorgang bearbeitet werden können.

Durch die erfindungsgemäßen Maßnahmen kann somit zum einen die Messgenauigkeit bzw. Reproduzierbarkeit des Messergebnisses bei einer Materialprüfung, beispielsweise Zugversuch, verbessert werden. Ferner kann das Schleifverfahren standardisiert und von ungelernten Bedienern durchgeführt werden, nämlich auch ggf. unter Festlegung einer Maximaltemperatur des Probenstückes während des Schleifvorganges.

Erfindungsgemäß wird die Kühlungseinrichtung während des Wendevorganges unter Kühlung des Probenstückes betrieben, vorzugsweise während des gesamten Wendevorganges.

Es versteht sich, dass an dem Probenhalter oder einem anderen geeigneten Teil des Probenschleifmaschinenaufsatzes und/oder an dem Probenstück ein Temperatursensor angebracht sein kann, um die Temperatur des Probenstückes während des Schleifvorganges zu kontrollieren. Bei Erreichen der für das Probenstück zulässigen Maximaltemperatur oder eines vordefiniertes Temperaturschwellwertes kann der Schleifvorgang bspw. unterbrochen bzw. die Zustellrate verringert werden. Der Temperatursensor kann auch Teil einer Steuerung bzw. Regelung der Kühleinrichtung sein, sodass bei Erreichen einer vorgegebenen Temperatur beispielsweise die Kühlleistung der Kühleinrichtung erhöht wird, um das Probenstück während des Schleifvorganges unterhalb der vorgegebenen Maximaltemperatur zu halten.

Das Kühlmittel kann ein geeignetes Kühlmittel sein, beispielsweise auf Wasserbasis mit geeigneten Zusatzstoffen wie beispielsweise Glykol.

Vorzugsweise weist der Probenhalter zwei zueinander lageveränderliche Haltebacken auf zwischen welchen zumindest ein Probenstück zur schleifenden Bearbeitung festlegbar, beispielsweise einklemmbar, ist, wobei zumindest eine oder beide Backen von einem Kühlmittel durchströmbare Kühlmittelleitungen als Teil der Kühleinrichtung aufweisen. Hierdurch ist eine besonders wirksame Kühlung des zumindest einen oder auch mehreren in dem Probenhalter festgelegten Probenstücken möglich.

Allgemein im Rahmen der Erfindung kann der Probenhalter zwei Spannbacken (allgemein: "Backen") aufweisen, zwischen welchen zumindest ein Probenstück festlegbar ist bzw. geklemmt werden kann. Die beiden Backen können als jeweils gegeneinander verspannbare Spannbacken ausgebildet sein, um das zumindest eine Probenstück festzulegen bzw. im Probenhalter einzuspannen. Das "Festlegen" erfolgt somit vorzugsweise unter Einspannen der Probestücke an dem Halter, wozu vorzugsweise entsprechende Einspannmittel vorgesehen sind.

Allgemein im Rahmen der Erfindung kann der Probenhalter auch mehrere Probenstücke bzw. einen Satz oder ein Paket von Probenstücken gleichzeitig während des Schleifvorganges festlegen bzw. einspannen. So können die Probenstücke beispielsweise aneinanderlegbare, z.B. planparallele, Seitenflächen aufweisen, beispielsweise in Form von Blechstücken ausgebildet sein, wobei mehrere Probenstücke deckungsgleich aufeinander angeordnet sind. Als "ein" oder "zumindest ein" Probenstück sei daher allgemein auch ein Satz oder Paket von Probenstücken verstanden, sofern sich aus dem Zusammenhang nichts anderes ergibt.

Insbesondere auch bei der gleichzeitigen Festlegung von mehreren Probenstücken in dem Probenhalter ist die Anordnung von Kühlmittelleitungen an oder in den beiden Backen des Probenhalters, zwischen welchen das oder die mehreren Probenstücke festgelegt bzw. eingespannt werden, besonders vorteilhaft, da hierdurch der Stapel bzw. Satz von Probenstücken besonders gleichmäßig gekühlt werden kann. "Gleichmäßig" heißt hierbei, dass die verschiedenen Probenstücke des gegebenen Satzes von Probenstücken bei der Kühlung möglichst die gleiche Temperatur aufweisen.

Bevorzugt sind die Kühlmittelleitungen der ersten und der zweiten der beiden Backen des Probenhalters mit einem Kühlmittelleitungsabschnitt miteinander verbunden. Hierdurch ist es ermöglicht, beide Backen des Probenhalters durch Kühlmittel einer gemeinsamen Kühlmittelquelle zu beschicken, was den apparativen Aufwand vermindert. Die in der ersten und in der zweiten Backe angeordneten Kühlmittelleitungsabschnitte sind somit durch einen kühlmittelübertragenden Kühlmittelleitungsabschnitt miteinander verbunden. Durch den einen Kühlmittelkreislauf, welcher sich durch beide Backen des Probenhalters erstreckt, kann ferner relativ einfach gewährleistet werden, dass beide Backen aufgrund der Kühlung dieselbe Temperatur aufweisen und damit auch die gegenüberliegenden Einspannoberflächen des Probenstückes oder des Satzes von Probenstücken, welche an den beiden Backen anliegen.

Besonders bevorzugt weist der die beiden Backen verbindende Kühlmittelleitungsabschnitt einen relativ zu der ersten und/ oder zu der zweiten Backe lageveränderlichen und/oder flexiblen Übergangsabschnitt auf. Hierdurch ist eine konstruktiv einfache Ausführungsform gegeben, bei welcher beide Backen des Probenhalters mit Kühlmittelleitungsabschnitten versehen sind. Die Lageveränderung des Übergangsabschnittes kann sich auf eine Lageveränderung desselben relativ zu einer Backe oder zu beiden Backen beziehen, an welcher/n der Kühlmittelleitungsübergangsabschnitt ("Übergangsabschnitt") angeschlossen ist. Ferner ist durch den lageveränderlichen und/oder flexiblen Übergangsabschnitt der Kühlmittelleitungen ermöglicht, dass die beiden Backen in ihrer Lage relativ zueinander veränderbar sind, beispielsweise einander angenähert oder voneinander beabstandet werden können, beispielsweise beim Einspann- oder Freigabevorgang des Probenstückes an dem Probenhalter. Bei der Lageveränderung der Backen zueinander kann somit der lageveränderliche und/oder flexible Übergangsabschnitt in seiner Lage relativ zu einer oder beiden Backen verändert und/oder aufgrund seiner Flexibilität deformiert werden. Diese Ausgestaltung ist insbesondere vorteilhaft, wenn ein Satz von Probenstücken zwischen den Backen festgelegt wird bzw. festgelegt ist. Durch den lageveränderlichen und/oder flexiblen Übergangsabschnitt ist es somit ermöglicht, dass die Backen über einen größeren Abstand voneinander beabstandet oder aufeinander zubewegt werden können bzw. die Weite der Einspannaufnahme für das Probenstück sich ändert, um das oder die Probenstücke am Probenhalter festzulegen oder freizugeben.

Der flexible Übergangsabschnitt der Kühlmittelleitung kann allgemein elastisch oder plastisch deformierbar sein.

Bevorzugt ist der Übergangsabschnitt der Kühlmittelleitungen zumindest teilweise außerhalb der Korpi von erster und zweiter Backe angeordnet, also außerhalb sowohl des Korpus der ersten Backe als auch außerhalb des Korpus der zweiten Backe. Hierdurch kann sich der Übergangsabschnitt besonders einfach an einen unterschiedlichen Abstand von erster und zweiter Backe anpassen, beispielsweise beim Einspannen eines oder mehrerer Probenstücke. Hierdurch kann zudem die Kühlmittelleitung bzw. der Anschluss des Übergangsabschnittes an die Anschlussstellen der jeweiligen Kühlmittelleitungen, baulich besonders einfach und mit hoher Dichtigkeit ausgebildet werden.

Nach einer bevorzugten Ausführungsform umfasst die Kühlmittelleitung zwei lageveränderliche und/oder flexible Übergangsabschnitte, welche jeweils mit einem ersten Ende mit der ersten Backe und mit einem zweiten Ende mit der zweiten Backe verbunden sind, wobei beide Übergangsabschnitte Teil eines gemeinsamen Kühlmittelkreislaufs sind. Hierdurch kann sich die Kühlmittelleitung des gemeinsamen Kühlmittelkreislaufs durch beide Backen und über eine möglichst große Ausdehnung der Backen erstrecken, um eine wirksame Kühlung derselben und damit auch des gehalterten Probenstückes zu bewirken, bei zugleich größtmöglicher Flexibilität in Bezug auf die Beabstandung der Backen zueinander beim Ein- und Ausspannen von Probenstücken. Diese Anordnung ist ferner besonders langlebig, da die Verbindungsbereiche der verschiedenen Kühlmittelleitungsabschnitte aneinander bei einer Betätigung der Backen nicht relativ zueinander lageverändert werden, was Dichtigkeitsprobleme bedingen könnte, sondern bei einer Lageveränderung der Backen der flexible Übergangsabschnitt der Kühlmittelleitung deformiert wird.

Insgesamt sind hierdurch die Enden der beiden Übergangsabschnitte an einer Backe durch einen Kühlmittelkanalabschnitt miteinander verbunden.

Der erfindungsgemäße Kühlmittelkreislauf weist aufgrund seiner besonderen Ausbildung zudem eine hohe Dichtigkeit und Langlebigkeit auf.

Bevorzugt ist eine der Backen an der anderen Backe lageveränderlich gehaltert, wobei durch die Lageveränderung die Weite des Haltebereichs bzw. Einspannschlitzes zur Aufnahme des mindestens einen Probenstückes veränderbar ist. Besonders bevorzugt bildet die eine Backe hierbei eine schlittenförmige Führung für die andere Backe aus.

Bevorzugt weist der Wendemechanismus eine Hubeinrichtung auf, mittels welcher der Probenhalter in eine erste und in eine zweite Arbeitsposition und in eine von diesen beiden Arbeitspositionen verschiedene und beabstandete Umstellpositionen überführbar ist, wobei der Aufsatz derart ausgebildet ist, dass in der Umstellposition der Probenhalter permanent an dem Aufsatz festgelegt und/oder geführt ist. Durch die Hubeinrichtung kann der Probenhalter von seiner Sollposition an der Schleifmaschine, welche der ersten Arbeitsposition entspricht, beabstandet werden, was dann bei ausreichendem Abstand das Wenden des Probenhalters ermöglicht, und nach dem Wendevorgang in die zweite Arbeitsposition überführt werden, um die andere Seite des Probenstückes schleifend bearbeiten zu können. Es versteht sich, dass die Hubbewegung des Probenhalters und die Wendebewegung desselben nacheinander erfolgen können oder aber auch gleichzeitig, also die Wendebewegung bereits eingeleitet wird, wenn die Hubbewegung noch nicht abgeschlossen ist. Durch den Hubvorgang wird somit die Überführung des Probenhalters aus seiner ersten Arbeitsposition in seine zweite Arbeitsposition wesentlich erleichtert. Die Hubeinrichtung ist vorzugsweise derart ausgebildet, dass die Hubrichtung beispielsweise in einem Winkel von 45° bis 135°, besonders bevorzugt zumindest im Wesentlichen senkrecht, zu der Schleifebene erfolgt, in welcher das Schleifmittel der Schleifmaschine wie beispielsweise ein Schleifenband an dem Probenstück in der ersten oder zweiten Arbeitsstellung desselben anliegt. Eine derartige Ausgestaltung ist besonders platzsparend und mechanisch stabil. In der ersten und in der zweiten Arbeitsposition des Probenhalters werden somit beide gegenüberliegenden Seiten des Probenstückes durch dasselbe Schleifmittel der Schleifmaschine, wie beispielsweise ein Schleifband, bearbeitet. Gegebenenfalls kann die Hubrichtung auch im Wesentlichen parallel zur Hauptebene, also dessen Querschnittsebene mit der größten Flächenerstreckung, verlaufen.

Die Hubeinrichtung kann somit beispielsweise eine Linearführung aufweisen, mittels welcher der Probenhalter aus der ersten Arbeitsposition in die Wendeposition und von dieser in die zweite Arbeitsposition überführt wird. Die Linearführung kann beispielsweise ein oder mehrere lineare Gestängeteile aufweisen, welche als Führungsschienen für den Probenhalter dienen. Die Linearführung kann sich im Wesentlichen in vertikaler Richtung, also in Schwerkraftrichtung bei Aufstellung der Schleifmaschine, erstrecken. Im Allgemeinen ist die Hubeinrichtung nicht auf eine Linearführung beschränkt, gegebenenfalls kann der Probenhalter auch in teilweise oder vollständig in einer bogenförmigen Führung von der ersten Arbeitsposition in die Wendeposition und dann in die zweite Arbeitsposition überführt werden, beispielsweise ist auch eine kreisbogenförmige Führung denkbar, was aber jeweils weniger bevorzugt ist. Eine Linearführung hat sich jedoch als baulich besonders einfach und mit besonders präziser Führung des Probenhalters herausgestellt und ermöglicht bei geringem Verschleiß eine hohe Hubgeschwindigkeit. Durch die geometrisch einfache lineare Hubbewegung wird auch die Gefahr einer Beschädigung der Kühlmittelleitungen verringert.

Es versteht sich, dass das Probenstück bei der Durchführung eines vollständigen Hubvorganges und bei der Überführung des Probenhalters aus der ersten Arbeitsposition in die Wendeposition und dann in die zweite Arbeitsposition, permanent an dem Probenhalter festgelegt ist. Das Probenstück ist hierbei an dem Probenhalter ortsunveränderlich festgelegt, beispielsweise fest eingespannt.

Vorzugsweise ist der Wendemechanismus auch derart ausgebildet, dass der Probenhalter um 360° oder mehr in einer vordefinierten Drehrichtung um eine Achse verdrehbar ist. Besonders bevorzugt ist die Richtung mit den Kühlmittelleitungen an den Wendemechanismus angepasst, um eine Verdrehung des Probenhalters um 360° oder mehr in einer vordefinierten Drehrichtung um eine Achse zu ermöglichen. Der Probenhalter und damit das an diesem festgelegte Probenstück kann somit für verschiedene Arbeitsschritte stets in derselben vordefinierten Drehrichtung verdreht werden. Bei diesen Arbeitsschritten kann beispielsweise ein an dem Probenhalter festgelegtes vorbestimmtes Probenstück aus der ersten Arbeitsstellung in die zweite Arbeitsstellung überführt werden und dann für eine nachfolgende weitere Schleifbearbeitung in derselben Drehrichtung weitergedreht und wieder in die erste Arbeitsstellung überführt werden, in welcher die erste Seite des Probenstückes dem Schleifmittel der Schleifmaschine zugewandt angeordnet ist. Dieser Zyklus kann dann mehrmals, beispielsweise mit vordefinierter oder frei wählbarer Zykluszahl durchgeführt werden, wobei anschließend beispielsweise eine Begutachtung des Resultats der Schleifbearbeitung vorgenommen werden kann, bis das Probenstück auf seine Sollmaße geschliffen ist. Der Wendemechanismus ist hierdurch besonders einfach ausgebildet, da der Probenhalter nur in einer vordefinierten Drehrichtung zu verdrehen ist, um das Probenstück mehrfach an verschiedenen Seiten bearbeiten zu können.

Vorzugsweise haltert der Wendemechanismus zumindest eine oder mehrere medienführende Leitungen oder umfasst diese, wobei die medienführenden Leitungen dem Probenhalter ein Betriebsmittel zuführen und/oder von diesem abführen. Ein derartiges fluides Betriebsmedium kann beispielsweise ein Kühlmittel zur Kühlung des Probenhalters bzw. eines gehalterten Probenstückes sein. Ein derartiges Betriebsmedium kann beispielsweise auch ein Druckbeaufschlagungsmittel für die Spanneinrichtung des Probenhalters sein, welche das zumindest eine Probenstück festlegt bzw. einspannt, beispielsweise ein Druckgas, Hydraulikflüssigkeit oder dergleichen. Ein derartiges Betriebsmedium kann beispielsweise auch ein elektrisches Signal, elektrischer Strom oder eine elektrische Stellgröße sein, beispielsweise um ein Signal eines Temperaturfühlers am Probenhalter zu einer Anzeige oder Auswerteeinrichtung weiterzuleiten, um einen elektrischen Antrieb zu betätigen, beispielsweise wenn die Spanneinrichtung des Probenhalters elektromotorisch betätigbar ist, oder dergleichen. Der Aufsatz ist hierdurch zum einen baulich besonders einfach ausgeführt, zum anderen besonders angepasst, um das Probenstück möglichst exakt, reproduzierbar und zeiteffektiv bearbeiten zu können.

Vorzugsweise weist der Wendemechanismus eine Drehkupplung mit zwei gegeneinander verdrehbaren Kupplungsteilen auf, wobei an einem ersten der beiden Kupplungsteile der Probenhalter ankoppelt und an dem anderen zweiten Kupplungsteil der Haltebereich des Aufsatzes an der Schleifmaschine ankoppelt. Durch die Drehkupplung ist in baulich besonders einfacher Weise ein Wenden des Probenhalters von seiner ersten in seine zweite Arbeitsposition möglich, zum anderen der Wendemechanismus besonders robust ausgebildet. Ferner ist hierdurch eine besonders maßgenaue und reproduzierbare Anordnung des Probenhalters in seiner ersten und zweiten Arbeitsposition relativ zu dem Schleifmittel der Schleifmaschine ermöglicht.

Eine baulich besonders einfache, robuste und zuverlässige Ausführungsform ist gegeben, wenn die Drehkupplung zumindest eine oder mehrere medienführende Durchleitungen aufweist, welche jeweils mit einem (ersten) Durchleitungsabschnitt sich in oder an dem ersten Kupplungsteil und mit einem anderen (zweiten) Durchleitungsabschnitt sich in oder an dem zweiten Kupplungsteil erstrecken und dass der erste und der zweite Durchleitungsabschnitt der jeweiligen Durchleitung mediendicht miteinander verbunden sind. Die medienführenden Durchleitungen sind hierdurch in der Drehkupplung aufgenommen und somit besonders geschützt, beispielsweise gegen mechanische Einwirkungen, wie diese auch bei der Befestigung des Probenstückes an dem Probenhalter auftreten können. Zudem sind die Durchleitungen gegen äußere Einflüsse wie beispielsweise Schleifstaub besonders geschützt. Ferner ist hierdurch auf baulich einfache Weise ermöglicht, dass der Probenhalter um beliebige Drehwinkel, beispielsweise auch um Drehwinkel größer 360° oder für eine Vielzahl von Drehungen, ausgebildet ist.

Die beiden Kupplungsstücke umgeben einander vorzugsweise in radialer Richtung, bzw. in Form von Drehzapfen und umgebender Hülse. Zum einen ist hierdurch eine einfache Halterung und gegebenenfalls auch Lagerung des radial inneren Kupplungsstückes an dem radial äußeren Kupplungsstück, möglich. Zum anderen können hierdurch an zumindest einer oder beiden der einander gegenüberliegenden Umfangsflächen von radial innerem und radial äußerem Kupplungsstück Teilabschnitte der Durchleitungen, einschließlich der Kühlmittelleitungen, angeordnet sein. Diese Teilstücke können sich teilumfänglich, bevorzugt vollumfänglich um das jeweilige Kupplungsstück erstrecken. Hierdurch kann bei jedem beliebigen Drehwinkel der Kupplungsstücke zueinander eine medienführende Durchleitung gegeben sein. Ferner sind hierdurch die Durchleitungsabschnitte auch besonders geschützt. Ferner ist hierdurch eine einfache Lagerung der beiden Kupplungsstücke aneinander ermöglicht, wozu beispielsweise an den einander zugewandten Umfangsflächen der Kupplungsstücke Axial- und/oder Radiallager vorgesehen sein können. Das radial innere Kupplungsstück ist vorzugsweise mit dem Probenhalter verbunden, vorzugsweise verdrehfest verbunden, wodurch sich eine robuste und baulich einfache Ausführungsform ergibt und eine besonders exakte Verdrehung des Probenhalters ermöglicht ist.

Vorzugsweise ist zumindest eine der Durchleitungen durch die Drehkupplung eine Hydraulik/Pneumatik-Durchleitung zur Beaufschlagung eines Backenspannmittels zur freigebbaren Einspannung des Probenstückes zwischen den beiden Backen. Das Probenstück kann hierdurch schnell und mit hoher Kraftbeaufschlagung und damit exakt auch während des Schleifvorganges an dem Probenhalter festgelegt werden.

Vorzugsweise weisen der Wendemechanismus und/oder die Hubeinrichtung motorische Antriebsmittel zur Lageveränderung des Probenhalters auf. Vorzugsweise ist ferner eine Steuerung zur programmgesteuerten Ansteuerung der Antriebsmittel vorgesehen. Die Hubeinrichtung ist vorzugsweise elektromotorisch betätigt. Vorzugsweise ist der Wendemechanismus elektromotorisch betätigt. Derartige elektromotorische Antriebe haben sich gegenüber Hydraulik/Pneumatik-Antrieben bewährt, da diese kontinuierlich und zuverlässig und ohne Schwankungen der ausgeübten Kräfte bzw. Drehmomente eine Betätigung des Wendemechanismus und/oder der Hubeinrichtung ermöglichen. Besonders bevorzugt werden als Antriebsmittel Schrittmotoren eingesetzt. Hierdurch ist zudem eine besonders einfache Programmsteuerung von Wendemechanismus und/oder Hubeinrichtung möglich, beispielsweise durch Angabe der jeweiligen Schrittzahlen, und die Einrichtungen besonders wartungsarm. Ferner können hierdurch besonders einfach Hubeinrichtung und Wendemechanismus gleichzeitig betätigt werden, beispielsweise derart, dass nach einem gewissen Anfangshub der Wendemechanismus betätigt wird, bevor die maximale Hubstellung des Probenhalters erreicht wird. Hierdurch ist eine beschleunigte Arbeitsweise der Schleifeinrichtung gegeben. Alternativ können natürlich auch Schaltkontakte vorgesehen sein, welche bei Erreichen einer Sollposition der Hubeinrichtung und/oder des Wendemechanismus einen Schaltvorgang auslösen und das Antriebsmittel stoppen oder in Betrieb setzen.

Besonders bevorzugt weist der Probenschleifmaschinenaufsatz somit sowohl eine erfindungsgemäße Kühleinrichtung als auch einen erfindungsgemäßen Wendemechanismus für den Probenhalter auf, welche in besonderer Weise bei der Bearbeitung des Probenstückes zusammenwirken. Besonders bevorzugte Ausführungsformen ergeben sich hierbei durch die Ansprüche. Vorzugsweise ist zumindest eine Durchleitung durch die Drehkupplung eine Kühlmittelleitungen ist, welche Kühlmittel dem Probenhalter zur Kühlung des Probenstückes zuführt oder abführt. Die Drehkupplung ist vorzugsweise derart ausgebildet, dass die beiden Kupplungsteile koaxial zu oder in Achsrichtung hintereinander angeordnet sind, dass an einem der Kupplungsteile an einer dem anderen Kupplungsteil zugewandten inneren oder äußeren Umfangs- oder Stirnfläche eine Nut als Teil der Kühlmittelleitung angeordnet ist, wobei eine Nutflanke über eine Teillänge der Nut offen ausgebildet ist und dass an dem anderen Kupplungsteil ein in die Nut mündender Kühlmittelzu- oder -abfluss vorgesehen ist.

Hierdurch ist auf besonders einfache Weise die Kühleinrichtung in dem Wendemechanismus integriert, mit besonders hoher Betriebssicherheit, Dichtigkeit und Schutz der Kühleinrichtung oder geringem Wartungsaufwand, auch unter Berücksichtigung von Umwelteinflüssen wie Schleifstaub.

Vorzugsweise ist eine Nut in der Aufnahme als auch eine korrespondierende Nut in dem Einsatz vorgesehen, was einen schnellen und sicheren Wechsel eines vorgegebenen Probenhalters durch einen anderen Probenhalter ermöglicht. So kann die Dimensionen des Schleifgutes je nach Norm variieren, was den Austausch des Probenhalters und/oder des das Schleifmittel umfassenden Schleifkopfes der Maschine erfordert.

Der Probenschleifmaschinenaufsatz ist ferner derart ausgebildet, dass der Probenhalter vorzugsweise motorisiert und vorzugsweise automatisch bzw. programmgesteuert eine Vor- und Rückwärtsbewegung durchführen kann bzw. durchführt, wenn das Probenstück in Wirkkontakt mit dem Schleifmittel ist. Die Vor- und Rückwärtsbewegung weist eine Richtungskomponente auf, welche quer oder senkrecht zur Probenstücklängsachse verläuft. Hierdurch ist eine besonders gleichmäßige Bearbeitung der zu schleifenden Flächen des Probenstückes möglich.

Ferner von der Erfindung umfasst ist eine Probenschleifmaschine mit einem Probenschleifmaschinenaufsatz gemäß der vorliegenden Erfindung. Der Schleifmaschinenaufsatz kann lösbar oder unlösbar an der Schleifmaschine befestigt sein. Gegebenenfalls kann der Schleifmaschinenaufsatz auch als Nachrüstaufsatz für eine bestehende Schleifmaschine ausgebildet sein.

Ferner umfasst die Erfindung ein Verfahren zum Schleifen eines Probenstückes, wobei zum Schleifen des Probenstückes eine erfindungsgemäße Probenschleifmaschine verwendet wird und wobei das Probenstück ein einer Prüfnorm entsprechender Prüfkörper ist. Die Vorteile ergeben sich aus dem zuvor Gesagten, insbesondere eine hohe Genauigkeit und Reproduzierbarkeit der Messergebnisse der Prüfungen. Es hat sich herausgestellt, dass hierdurch besonders exakt Probenstücke entsprechend einer entsprechenden Prüfnorm hergestellt werden können, mit besonders geringen Toleranzabweichungen, besonders geringem Ausschuss und in für das Probenstück besonders geringer Wärmeeinbringung beim Schleifvorgang, sodass besonders bei empfindlichen Materialien Probenuntersuchungen wie beispielsweise Zug- und/oder Dehnungsprüfungen nach entsprechenden Prüfnormen besonders zuverlässig durchführbar sind.

Die Erfindung wird nachfolgend anhand eines Ausführungsbeispiels beschrieben. Sämtliche Merkmale des Ausführungsbeispiels sind unabhängig voneinander auch allgemein im Rahmen der Erfindung offenbart. Es zeigen:
- Figur 1:: eine schematische Ansicht einer Probenschleifmaschine mit Schleifmaschinenaufsatz,
- Figur 2:: eine perspektivische Darstellung eines Schleifmaschinenaufsatzes,
- Figur 3:: einen Schleifmaschinenaufsatz gemäß Figur 2 mit teilweise gewendetem Probenhalter,
- Figur 4:: eine Querschnittsdarstellung eines Probenhalters mit Kühleinrichtung und Drehkupplung,

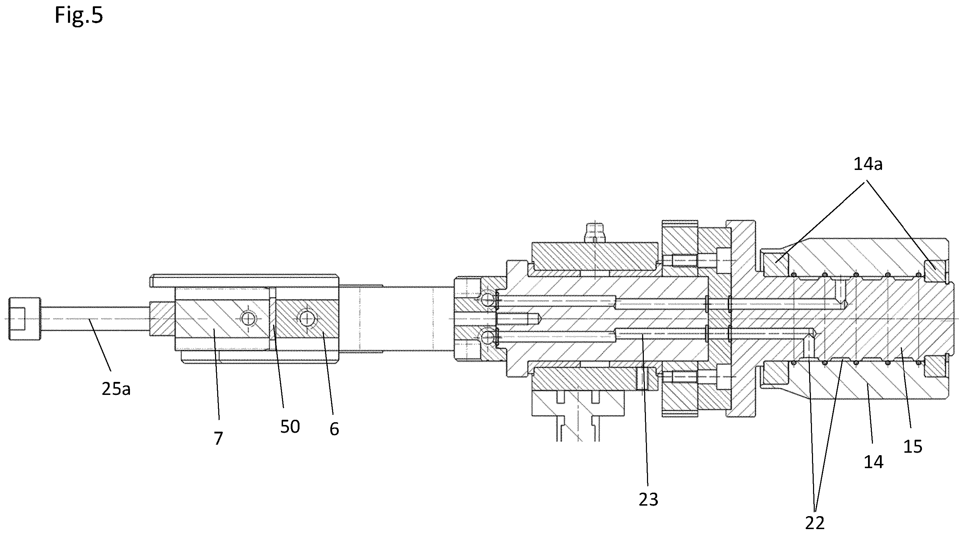

- Figur 5:: eine Querschnittsdarstellung des Probenhalters mit Drehkupplung gemäß Figur 4,

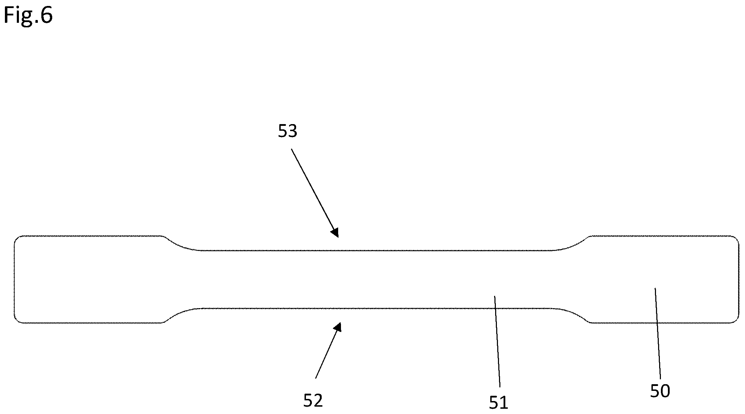

- Figur 6:: eine Seitenansicht eines Probenstückes.

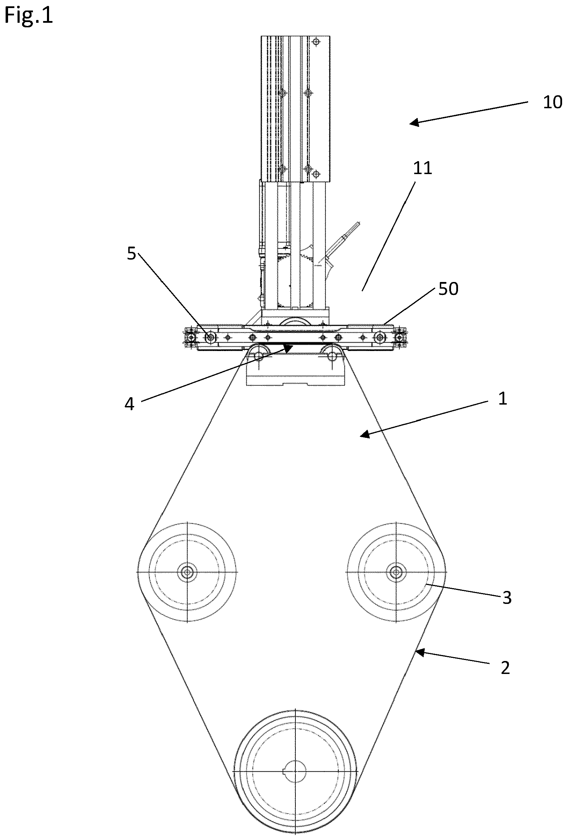

Figur 1 zeigt eine Probenschleifmaschine 1 mit erfindungsgemäßem Probenschleifmaschinenaufsatz 10. Der Aufsatz 10 kann lösbar oder unlösbar mit der Schleifmaschine 1 verbunden sein.

Die Schleifmaschine 1 ist hier beispielsweise als Bandschleifmaschine ausgebildet, ohne hierauf beschränkt zu sein. Das Schleifmittel ist hierbei als Schleifenband 2 ausgebildet, welches über mehrere Umlenkrollen 3 geführt ist und durch einen Antrieb (nicht dargestellt) angetrieben wird. Das Schleifmittel wird durch ein Andruckelement 4 an die zu bearbeitende Seite 52 bzw. 53 des mittleren Abschnittes 51 des Probenstückes 50 angedrückt bzw. stellt eine Unterstützung für das Schleifmittel 2 dar, wenn das im Probenhalter 5 eingespannte Probenstück oder ein Satz von Probenstücken an das Schleifmittel zur schleifenden Bearbeitung angedrückt wird. Hierzu kann beispielsweise der komplette Schleifkopf der Maschine an das Probenstück angedrückt werden.

Der Probenhalter 5 weist eine Kühleinrichtung 20 zur Kühlung des an dem Probenhalter festgelegten Probenstückes 50 auf.

Der Aufsatz 10 weist einen Wendemechanismus 11 für den Probenhalter auf, mittels welchem der Probenhalter 5 unter permanenter Festlegung des Probenstückes 50 an dem Probenhalter 5 in eine erste und eine zweite Arbeitsposition zur Bearbeitung des Probenstückes an der Schleifmaschine überführbar ist, wobei in beiden Arbeitspositionen jeweils eine andere von zwei gegenüberliegenden Seiten des Probenhalters bzw. entsprechend gegenüberliegende Seiten 51, 52 des eingespannten Probenstückes der Schleifmaschine zugewandt angeordnet und mit dem Schleifmittel 2 der Schleifmaschine in Wirkkontakt bringbar ist.

Der Probenhalter 5 weist zwei zueinander lageveränderliche Haltebacken (Spannbacken) 6,7 auf, zwischen welchen in der schlitzförmigen Aufnahme 8 zumindest ein oder mehrere Probenstücke zur schleifenden Bearbeitung festlegbar oder festgelegt sind, d.h. eingespannt sind. Zumindest eine oder hier beide Backen 6,7 weisen von einem Kühlmittel durchströmbare Kühlmittelleitungen 24a, 24b, 26, 27 als Teil der Kühleinrichtung 20 auf.

Die Kühlmittelleitungen 24a, 24b der ersten und der zweiten der beiden Backen 6,7 sind mit zumindest einem, hier zwei, Kühlmittelleitungsübergangsabschnitten 26, 27 zu einem Kühlmittelkreislauf miteinander verbunden. Die Kühlmittelleitungen 24a, 24b der ersten und der zweiten der beiden Backen 6,7 verlaufen zumindest teilweise, hier vollständig, entlang der Einspannaufnahme 8, wodurch sich eine gute Kühlung der Probenstücke beim Schleifvorgang ergibt.

Zur Überwachung der Temperatur des Probenhalters 5 kann ein Temperatursensor 30 vorgesehen sein, welcher an eine Steuerung für das Kühlmittel angeschlossen sein kann.

Der oder die die beiden Backen 6,7 verbindende/n Kühlmittelleitungsabschnitt 25a-d, 26,27 weisen einen relativ zu der ersten und/oder zu der zweiten Backe, hier zu beiden Backen 6,7, lageveränderlichen und/oder flexiblen Übergangsabschnitt 26,27 auf. Der flexible Übergangsabschnitt 26,27 ist hier plastisch oder elastisch deformierbar. Der Übergangsabschnitt 26,27 kann ein Schlauch wie z.B. Kunststoffschlauch, Wellschlauch oder dgl. sein. Eine Lageveränderung der Übergangsabschnitte 26,27 zu der jeweiligen Backe kann beispielsweise durch Gelenkverbindungen an der Übergangsabschnitten zu dem angrenzenden Kühlmittelleitungsabschnitt ermöglicht werden, wenn die Übergangsabschnitte selber z.B. zumindest im Wesentlichen starr ausgebildet sind.

Alternativ könnte an einer der Seitenflächen von einer Backe ein länglicher, seitlich offener Kanalabschnitt vorgesehen sein, welcher in eine Kanalmündung an der Backe mündet, wobei Kanalabschnitt und -mündung jeweils Teil des Kühlmittelkreislaufs sind. Bei Verschiebung der Backen gegeneinander zum Ein- oder Ausspannen des Probenstückes wird dann der seitlich offene Kanalabschnitt gegenüber die Kanalmündung der anderen Backe verschoben. Es hat sich aber herausgestellt, dass eine solche Ausgestaltung verstärkt zu Dichtigkeitsproblemen führt, insbesondere auch bei hohen Spannkräften auf die Einspannbacken 6,7.

Der Übergangsabschnitt 26,27 der Kühlmittelleitungen ist zumindest teilweise oder hier vollständig außerhalb des Korpus der ersten Backe 6 und außerhalb des Korpus der zweiten Backe 7 angeordnet.

Die lageveränderlichen und/oder flexible Übergangsabschnitte 26, 27 sind jeweils mit einem ersten Ende mit der ersten Backe und mit einem zweiten Ende mit der zweiten Backe verbunden, nämlich jeweils mit den Anschlusstücken 25a,25b,25c, 25d. Beide Übergangsabschnitte 26,27 sind somit Teil eines gemeinsamen Kühlmittelkreislaufs. Anschlusstücke 25a,25b sind jeweils ortsfest an der Backe 6 angeordnet, die Anschlusstücke 25c,25d sind jeweils ortsfest an der Backe 7 angeordnet, jeweils bezogen auf den Betrieb der Schleifmaschine. Hierdurch weisen die Anschlüsse eine hohe Dichtigkeit und lageveränderliche Teile im Dichtbereich werden vermieden. Die Lageveränderung der Backen 6,7, beim Ein- und Ausspannen der Probenstücke wird vielmehr durch die Lageveränderung und/oder Flexibilität der Übergangsabschnitte 26, 27 aufgefangen.

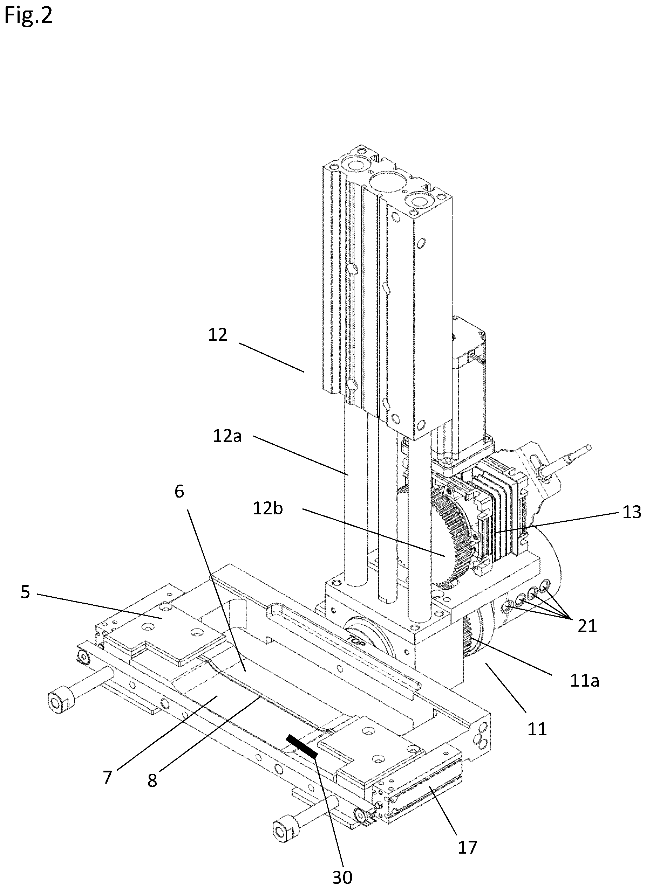

Gemäß Figur 2 weist der Wendemechanismus 11 einen Antrieb 11A zum Wenden des Probenhalters 5 auf. Der Probenhalter 5 ist hierzu an einer Achse drehbar gelagert. Die Achse A wird gleichzeitig durch die beiden Kupplungsstücke 14, 15 der Drehkupplung 19 definiert. Der Antrieb 11A wirkt hierbei mit dem Kupplungsstück 15 oder mit einem an diesem kraft- oder drehmomentübertragenden Teil zusammen, an welchem der Probenhalter 5 verdrehfest befestigt ist.

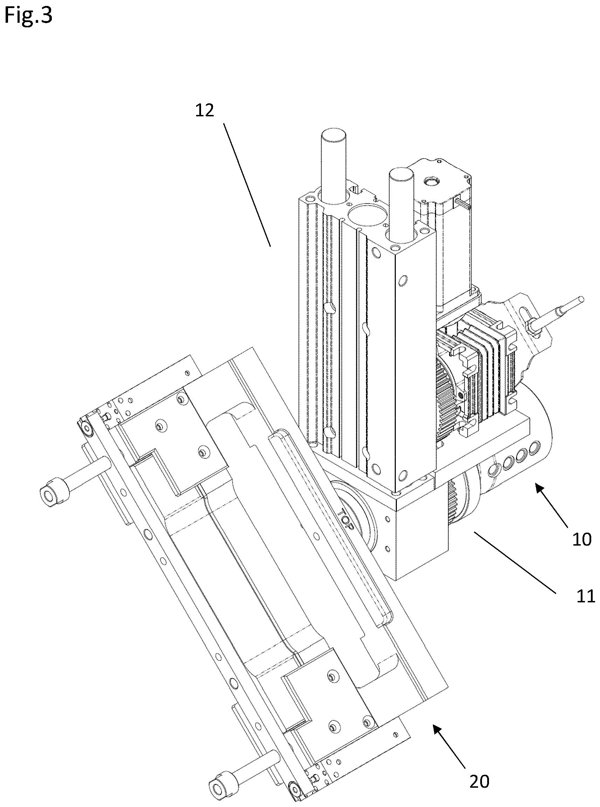

Der Wendemechanismus 11 weist ferner eine Hubeinrichtung 12 auf, mittels welcher der Probenhalter 5 in die erste und in die zweite Arbeitsposition und in eine von diesen beiden Arbeitspositionen verschiedene Wendeposition (siehe Figur 3) überführbar ist, wobei in der Wendeposition der Probenhalter 5 von der ersten und von der zweiten Arbeitsposition beabstandet ist, und dass der Aufsatz derart ausgebildet ist, dass in der Wendeposition der Probenhalter permanent an dem Aufsatz festgelegt und/oder geführt ist. Die Hubeinrichtung 12 weist einen Antrieb 12b zum Verfahren des Probenhalters entlang der Führung 12a bzw. hier zum Anheben bzw. Absenken des Probenhalters auf das Schleifmittel der Schleifmaschine auf.

Der Wendemechanismus 11 ist ausgebildet, um den Probenhalter 5 um 360° oder mehr in einer vordefinierten Drehrichtung um eine Achse A zu verdrehen. Die Hubeinrichtung 12 weist eine Führung 12a, hier in Form einer Linearführung auf, an welcher der Probenhalter 5 vertikal verfahrbar bzw. gegenüber der Unterstützung 4 anhebbar und absenkbar ist.

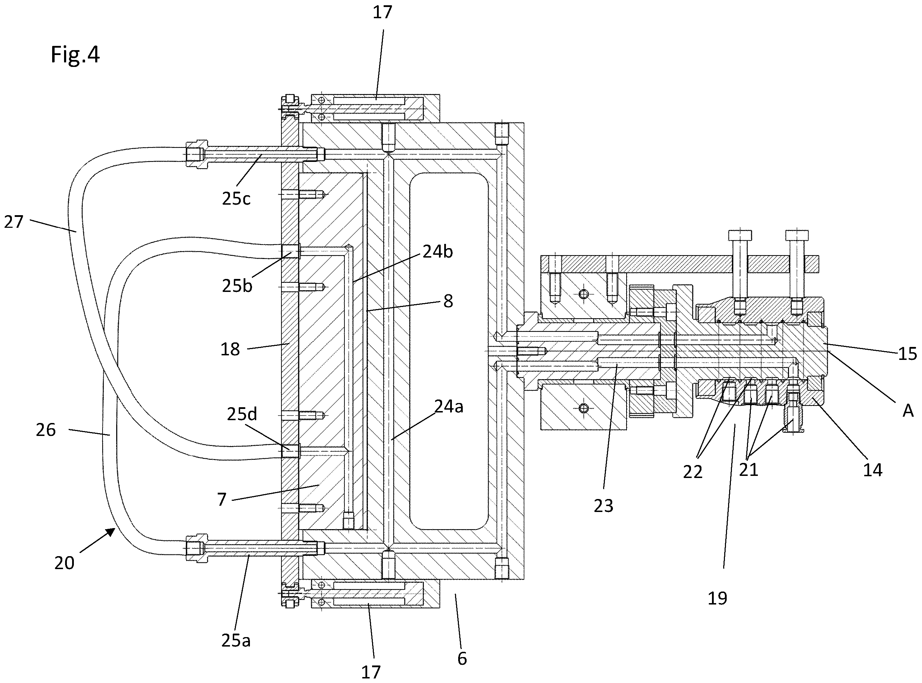

Der Wendemechanismus 11 haltert oder umfasst zumindest eine oder mehrere medienführende Leitungen 23 (Fig. 4), welche dem Probenhalter 5 ein Betriebsmedium, wie beispielsweise Kühlmittel zu den Kühlmittelleitungen 24a,24b, Druckbeaufschlagungsmittel für die Einspanneinrichtung mit den Aktuatoren 17 oder dergleichen, zuführen und/oder von diesem abführen.

Der Wendemechanismus 11 weist eine Drehkupplung 19 mit zwei gegeneinander verdrehbaren Kupplungsteilen 14,15 auf, wobei an einem ersten der beiden Kupplungsteile 15 der Probenhalter 5 ankoppelt und an dem anderen zweiten Kupplungsteil 14 der Haltebereich des Aufsatzes an der Schleifmaschine ankoppelt.

Die Drehkupplung 19 weist zwei Kupplungsstücke 14,15 mit medienführenden Durchleitungen 23 auf, welche mit Medien für den Probenhalter beschickt werden, beispielsweise in Form von Kühlleitungen der Kühleinrichtung, Hydraulik/PneumatikLeitungen für den Betrieb des Aktuators oder dergleichen.

Die Durchleitungen sind jeweils mit einem (ersten) Durchleitungsabschnitt 21 in Form von Ein- und Auslässen in oder an dem ersten Kupplungsteil 14 und mit einem anderen (zweiten) Durchleitungsabschnitt 22, 23 in oder an dem zweiten Kupplungsteil 15 angeordnet. Der erste und der zweite Durchleitungsabschnitt 21 bzw. 22, 23 der jeweiligen Durchleitung mediendicht miteinander verbunden, um medienführend eine durchgehende Durchleitung auszubilden.

Die Kühleinrichtung 20 für den Probenhalter 5 weist einen Kühlmitteleinlass 21 und Kühlmittelauslass 22 an dem Aufsatz, genauer gesagt an dem Wendemechanismus 11 auf. Kühlmitteleinlass und -auslass 21, 22 sind hier im Speziellen an der Drehkupplung 19 angeordnet, genauer gesagt an der radial äußeren Hülse 14. Durch die Kühlmittelleitungsabschnitte bzw. Durchleitungsabschnitte 23 sind die Kühlmittelleitungen mit den Kühlmittelleitungen des Probenhalters vom Kühlmittel durchleitend verbunden. In dem Probenhalter sind die Kühlmittelleitungsabschnitte 24A in der ersten Backe 6 und 24B in der zweiten Backe 7 vorgesehen. Die Kühlmittelleitungsabschnitte 24A, 24B erstrecken sich über einen Teil der Längserstreckung des Einspannspaltes 8, in welchem das Probenstück 50 durch Spannung der beiden Backen 6, 7 gegeneinander eingespannt wird. Der Kühlmittelleitungsabschnitt 24A in der Backe 6 ist hierbei mit einem Leitungsabschnitt 25A, welcher hier als Anschlussstück ausgebildet ist, mit dem flexiblen Übergangsabschnitt 26 der Kühlmittelleitung verbunden, das andere Ende des Abschnittes 26 ist mit dem Anschlussstück 25B verbunden, welches in den Kühlmittelleitungsabschnitt 24B mündet, das andere Ende des Abschnittes 24B ist mit einem weiteren Anschlussstück 25D verbunden, an welchem der flexible Übergangsabschnitt 27 der Kühlmittelleitung angeschlossen ist. Das andere Ende des Leitungsabschnittes 26 ist mit dem Anschlussstück 25C verbunden, welches wiederum Kühlmittel-führend mit dem Kühlmittelauslass 22 verbunden ist.

Durch die flexiblen Übergangsabschnitte 26, 27 können die Backen 6, 7 zueinander lageverändert werden, um das Probenstück 25 an dem Halter 5 einzuspannen oder von diesem freizugeben.

Zumindest einem oder beiden der Kupplungsstücke 14, 15 ist hierbei eine Umfangsnut angeordnet, welche sich vollumfänglich um die Achse A erstreckt. Die Umfangsnut ist hierbei an der Außen- bzw. Innenseite der Kupplungsstücke 14, 15, dem jeweils anderen Stück zugewandt, angeordnet. Die Nut erstreckt sich hierbei vorzugsweise vollumfänglich um die Innenfläche der Hülse 14 und/oder die Außenfläche des innenliegenden Teils 15. Hierdurch ist gewährleistet, dass während der Betätigung des Wendemechanismus in jeder Stellung des Probenhalters, bezogen auf Hub- und Verdrehstellungen, stets der jeweilige Durchleitungsabschnitt des Probenhalters medienführend bezogen auf das in der Durchleitung geführte Medium dem Einlass bzw. Auslass 21, 22 in Verbindung steht. Insbesondere gilt dies für das Betriebsmittel des Aktuators 17 zur Probeneinspannung. Es versteht sich, dass gegebenenfalls geringfügige Unterbrechungen des Medienüberganges vom Einlass 21 in den Auslass 22 vorliegen können, sofern hierdurch die Funktion nicht beeinträchtigt wird, insbesondere stets eine ausreichende Kühlung sichergestellt ist und stets der Aktuator 17 seine Einspannfunktion ausübt.

Die Einspanneinrichtung des Probenhalters 5 umfasst die Aktuatoren 17, mittels welcher die beiden Spannbacken 6, 7 des Probenhalters zueinander lageveränderlich sind, um den schlitzförmigen Haltebereich 8 aufzuweiten oder zu verengen und so das Probenstück 50 einspannen oder freigeben zu können. Die Aktuatoren 17 sind hierbei an beiden gegenüberliegenden Seiten des Probenhalters 5 angeordnet. Die Aktuatoren 17 wirken auf eine Traverse 18 ein, an welcher die Haltebacke 7 angeordnet ist, sodass durch Bewegung der Traverse 18 oder eines Druckstückes bzw. einen Mitnehmer die Backe 7 beim Ein- bzw. Ausspannen des Probenstückes bewegbar ist.

Der Aktuator 17 ist hier als pneumatisch oder hydraulisch betätigbarer Kolben ausgebildet. Der Kolben ist hierbei über Durchleitungen mit einem der Ein- und Auslässe 21, 22 verbunden, welche an einer entsprechenden Druckquelle mit Ansteuerung verbunden ist, um den als Kolben ausgebildeten Aktuator 17 betätigen zu können. Durch die Pneumatik, insbesondere Hydraulik des Aktuators kann eine besonders hohe Haltekraft auf das Probenstück ausgeübt werden. Gegebenenfalls könnten die Aktuatoren 17 auch als Elektromotoren ausgebildet sein, wobei die Durchleitungen in der Drehkupplung dann durch elektrische Leitungen ausgebildet sein können. Um die elektrische Leitung in der Drehkupplung durchführen zu können, kann beispielsweise ein ringförmiger Kontakt vorgesehen sein, auf welchem ein Schleifkontakt bewegt wird, um den Aktuator 17 bei Verdrehung des Probenhalters permanent betätigen zu können. Auch durch die Durchleitungen durch die Drehkupplung ist gewährleistet, dass der Aktuator 17 bei Betätigung des Wendemechanismus permanent, also über alle Stellungen des Probenhalters betrieben wird.

Mit der erfindungsgemäßen Probenschleifmaschine 1 können Probenstücken, welche bei Materialprüfungen nach Prüfnormen, insbesondere einschlägige DIN, ISO oder ASTM-Normen oder dergleichen, eingesetzt werden, besonders zuverlässig und reproduzierbar hergestellt werden.

## Patentansprüche

1. Probenschleifmaschinenaufsatz mit einem Probenhalter zur lösbaren Festlegung mindestens eines zu schleifenden Probenstückes, wobei der Aufsatz an einer Probenschleifmaschine anordenbar und/oder angeordnet ist, sodass das von dem Probenhalter festgelegte Probenstück von der Schleifmaschine schleifend bearbeitet werden kann,
**dadurch gekennzeichnet,**
(i) **dass** der Probenhalter eine Kühleinrichtung zur Kühlung des an dem Probenhalter festgelegten Probenstückes aufweist, und/oder
(ii) **dass** der Aufsatz einen Wendemechanismus für den Probenhalter aufweist, mittels welchem der Probenhalter unter permanenter Festlegung des Probenstückes an dem Probenhalter in eine erste und eine zweite Arbeitsposition zur Bearbeitung des Probenstückes an der Schleifmaschine überführbar ist, wobei in beiden Arbeitsposition jeweils eine andere von zwei gegenüberliegenden Seiten des Probenhalters der Schleifmaschine zugewandt angeordnet und mit dem Schleifmittel der Schleifmaschine in Wirckontakt bringbar ist.

2. Aufsatz nach Anspruch 1, **dadurch gekennzeichnet, dass** der Probenhalter zwei zueinander lageveränderliche Haltebacken aufweist, zwischen welchen zumindest ein Probenstück zur schleifenden Bearbeitung festlegbar ist, und dass zumindest eine oder beide Backen von einem Kühlmittel durchströmbare Kühlmittelleitungen als Teil der Kühleinrichtung aufweisen.

3. Aufsatz nach Anspruch 2, **dadurch gekennzeichnet, dass** die Kühlmittelleitungen der ersten und der zweiten der beiden Backen mit zumindest einem Kühlmittelleitungsübergangsabschnitt zu einem Kühlmittelkreislauf miteinander verbunden sind.

4. Aufsatz nach Anspruch 3, **dadurch gekennzeichnet, dass** der die beiden Backen verbindende Kühlmittelleitungsabschnitt einen relativ zu der ersten und/oder zu der zweiten Backe lageveränderlichen und/oder flexiblen Übergangsabschnitt aufweist.

5. Aufsatz nach Anspruch 3 oder 4, **dadurch gekennzeichnet, dass** der Übergangsabschnitt der Kühlmittelleitungen zumindest teilweise außerhalb des Korpus der ersten Backe und/oder außerhalb des Korpus der zweiten Backe angeordnet ist.

6. Aufsatz nach einem der Ansprüche 1 bis 5, **dadurch gekennzeichnet, dass** die Kühlmittelleitung zwei lageveränderliche und/oder flexible Übergangsabschnitte aufweist, welche jeweils mit einem ersten Ende mit der ersten Backe und mit einem zweiten Ende mit der zweiten Backe verbunden sind, und dass beide Übergangsabschnitte Teil eines gemeinsamen Kühlmittelkreislaufs sind.

7. Aufsatz nach einem der Ansprüche 1 bis 6, **dadurch gekennzeichnet, dass** der Wendemechanismus eine Hubeinrichtung aufweist, mittels welcher der Probenhalter in die erste und in die zweite Arbeitsposition und in eine von diesen beiden Arbeitspositionen verschiedene Wendeposition überführbar ist, wobei in der Wendeposition der Probenhalter von der ersten und von der zweiten Arbeitsposition beabstandet ist, und dass der Aufsatz derart ausgebildet ist, dass in der Wendeposition der Probenhalter permanent an dem Aufsatz festgelegt und/oder geführt ist.

8. Aufsatz nach einem der Ansprüche 1 bis 7, **dadurch gekennzeichnet, dass** der Wendemechanismus ausgebildet ist, den Probenhalter um 360° oder mehr in einer vordefinierten Drehrichtung um eine Achse zu verdrehen.

9. Aufsatz nach einem der Ansprüche 1 bis 8, **dadurch gekennzeichnet, dass** der Wendemechanismus zumindest eine oder mehrere medienführende Leitungen haltert oder umfasst, welche dem Probenhalter ein Betriebsmedium, wie beispielsweise Kühlmittel, Druckbeaufschlagungsmittel für die Einspanneinrichtung oder dergleichen, zuführen und/oder von diesem abführen.

10. Aufsatz nach einem der Ansprüche 1 bis 9, **dadurch gekennzeichnet, dass** der Wendemechanismus eine Drehkupplung mit zwei gegeneinander verdrehbaren Kupplungsteilen aufweist, wobei an einem ersten der beiden Kupplungsteile der Probenhalter ankoppelt und an dem anderen zweiten Kupplungsteil der Haltebereich des Aufsatzes an der Schleifmaschine ankoppelt.

11. Aufsatz nach Anspruch 10, **dadurch gekennzeichnet, dass** die Drehkupplung zumindest eine oder mehrere medienführende Durchleitungen aufweist, welche jeweils mit einem (ersten) Durchleitungsabschnitt sich in oder an dem ersten Kupplungsteil und mit einem anderen (zweiten) Durchleitungsabschnitt sich in oder an dem zweiten Kupplungsteil erstrecken, und dass der erste und der zweite Durchleitungsabschnitt der jeweiligen Durchleitung mediendicht miteinander verbunden sind.

12. Probenschleifmaschinenaufsatz nach einem der Ansprüche 1 bis 11, **dadurch gekennzeichnet, dass**
(i) zumindest eine Durchleitung durch die Drehkupplung eine Kühlmittelleitung ist, welche Kühlmittel dem Probenhalter zur Kühlung des Probenstückes zuführt oder abführt, und/oder.
(ii) zumindest eine der Durchleitungen eine Medienleitung zur Betätigung eines Backenspannmittels zur freigebbaren Einspannung des Probenstückes zwischen den beiden Backen ist.

13. Probenhalteraufsatz nach einem der Ansprüche 1 bis 12, **dadurch gekennzeichnet, dass** die beiden Kupplungsteile radial einander umgebend oder koaxial hintereinander angeordnet sind, dass an einem der Kupplungsteile an einer dem anderen Kupplungsteil zugewandten inneren oder äußeren Umfangs- oder Stirnfläche eine Nut als Teil der Kühlmittelleitung angeordnet ist, wobei eine Nutflanke über zumindest eine Teillänge der Nut oder die gesamte Nutlänge offen ausgebildet ist, und dass an dem anderen Kupplungsteil ein in die Nut mündender Zu- oder -abfluss für ein fluides Medium wir beispielsweise Kühlmittel oder Druckbeaufschlagungsmittel vorgesehen ist.

14. Probenschleifmaschine mit einem Probenschleifmaschinenaufsatz nach einem der Ansprüche 1-13.

15. Verfahren zum Schleifen eines Probenstückes, wobei zum Schleifen des Probenstückes eine Probenschleifmaschine nach Anspruch 14 verwendet wird und wobei das Probenstück ein einer Prüfnorm entsprechender Prüfkörper ist.
